# DEMANDE DE BREVET EUROPEEN

(11) **EP 4 417 554 A1**
(43) Date de publication de la demande: **21.08.2024**
(21) Numéro de dépôt: 24157821.0
(22) Date de dépôt: 15.02.2024
(51) Int. Cl.: B65G 51/03

(54) **CONVOYAGE D' ÉLÉMENT DE BOUCHAGE**

(30) Priorité: 16.02.2023 FR 2301450
(71) Demandeur: Sidel Participations, 76930 Octeville-sur-Mer (FR)
(72) Inventeur: SPIESSER, Daniel, 67116 REICHSTETT (FR); LORANGE, Stéphane, 67116 REICHSTETT (FR); ROTH, Emmanuel, 67116 REICHSTETT (FR)
(74) Mandataire: Sidel Group

(57) **Abrégé**

Dispositif (1) de convoyage d'élément de bouchage (2) du type bouchon, où les éléments de bouchage (2) sont poussés de façon aéraulique, ledit dispositif comprenant, d'une part, un plénum (3) allongé dans lequel circule un fluide gazeux, et, d'autre part, un canal (4) dans lequel circulent les éléments de bouchage (2) selon une direction d'avance (6) et qui présente une face avant (7), une face arrière (8), et deux tranches (9). Ce dispositif est caractérisé en ce que il comprend un circuit aéraulique (10) pour amener le fluide gazeux depuis le plénum (3) jusque dans le canal (4) pour y pousser les éléments de bouchage (2), ledit canal (4), au niveau de sa face arrière (8), se trouvant contre le plénum (3), et, au niveau de sa face avant (7), étant fermé au moins partiellement par une contre-plaque (5) que comprend le dispositif, préférablement une contre- plaque (5) amovible, le circuit aéraulique (10) débouchant dans le canal (4) au niveau d'au moins une tranche (9).

## Description

La présente invention relève du domaine des équipements et méthodes pour le conditionnement de liquide au sein d'une ligne de production. Plus particulièrement, dans ce type de lignes, qui traitent des contenants du type bouteille, flacon ou autre, il est nécessaire de déplacer les éléments de bouchage desdits contenants, notamment depuis un stock jusqu'à la machine de bouchage.

Ainsi, les éléments de bouchage, qui sont généralement des bouchons, des couvercles ou des couronnes par exemple métalliques, sont déplacés depuis un équipement qui les a correctement orientés à partir d'une zone de vrac dans laquelle les éléments de bouchage ont une orientation inconnue, et ce jusqu'à une boucheuse parfois intégrée à la remplisseuse.

Ce déplacement est généralement organisé au sein d'une goulotte ou canal dont les dimensions de la section sont adaptées à celles de l'élément de bouchage en en formant un gabarit. Les éléments de bouchage sont entraînés dans un tel canal, qui en conserve l'orientation, c'est-à-dire qu'il évite que l'élément de bouchage, qui a été orienté avec son fond en forme de disque dans une certaine position, ne pivote jusqu'à ce que son fond se trouve de l'autre côté. L'entraînement peut se faire par injection de fluide gazeux, généralement simplement de l'air, éventuellement nettoyé ou aseptisé quand les conditions d'usage le nécessitent. Dans de telles réalisations, de l'air est injecté dans le canal de circulation des éléments de bouchage, ce canal étant quasiment fermé pour obtenir une circulation d'air en son sein, qui poussera les éléments de bouchage. L'air est insufflé dans le canal, avec une direction qui fait avancer l'un derrière l'autre les éléments de bouchage.

Ainsi, par exemple, on connaît la publication US2009166153 qui divulgue une façon d'entraîner des éléments de bouchage comme des bouchons, ou couronnes. Le dispositif comprend un plénum de forme allongée, qui s'étend le long du trajet que doivent suivre les bouchons. Des pompes alimentent ce plénum en air comprimé. Un canal est aménagé contre le plénum, à l'aide de parois grâce auxquelles le bouchon peut glisser contre le plénum. Tout le long du trajet de déplacement, des ouïes sont prévues dans la surface du plénum contre laquelle les bouchons circulent, de sorte à pousser les bouchons.

Il existe toutefois la nécessité d'améliorer les réalisations existantes en particulier en les rendant plus fiables et moins consommatrices d'énergie. En effet, dans les mises en oeuvre existantes, des blocages peuvent se produire, l'élément de bouchage se cabrant ou se bloquant dans le canal. En outre, faire avancer les éléments de bouchage avec des ouïes successives positionnées comme connu aujourd'hui nécessite une grande source d'énergie, puisqu'il est nécessaire d'alimenter en permanence le plénum en air sous pression.

L'invention vise cet objectif grâce à l'injection d'air vers les côtés de l'élément de bouchage plutôt que contre son fond, ce dans un canal qui circule contre le plénum et jusqu'auquel l'air sous pression est envoyé par un circuit aéraulique circulant entre le plénum et le canal.

A cet effet, l'invention a pour objet un dispositif de convoyage d'élément de bouchage du type bouchon, où les éléments de bouchage sont poussés de façon aéraulique, ledit dispositif comprenant, d'une part, un plénum allongé dans lequel circule un fluide gazeux, et, d'autre part, un canal dans lequel circulent les éléments de bouchage selon une direction d'avance et qui présente une face avant, une face arrière, et deux tranches.

Le dispositif a donc une forme allongée dans une direction dite direction d'avance, qui est la direction le long de laquelle les éléments de bouchage doivent être déplacés.

Comme il sera encore décrit, les éléments de bouchage sont globalement des disques de faible épaisseur, donc de hauteur moins élevée que leur diamètre. L'élément de bouchage peut être une capsule métallique, un couvercle plastique, un bouchon, à visser, avec un rabat, etc. Dans certains cas, l'élément de bouchage est donc une capsule relativement plate, alors que dans d'autres cas, la hauteur peut être plus grande que le diamètre, comme dans des bouchons « sport », avec un embout pour la consommation directe, éventuellement aussi avec un capuchon. On comprend que l'élément de bouchage présente une forme lui permettant de coopérer pour un montage sur un conteneur de type bouteille, par serrage ou vissage.

Le déplacement dans le dispositif se fait de sorte que les éléments de bouchage sont non pas les uns sur les autres, c'est-à-dire avec leurs disques de base globalement superposés, mais les uns à la suite des autres, c'est-à-dire avec leurs disques globalement les uns à côté des autres. Les disques de base des éléments de bouchage, à partir desquels ils présentent une certaine hauteur, s'étendent donc globalement dans un même plan, de sorte que la suite des éléments de bouchage, en configuration de déplacement, a une hauteur qui correspond environ à la hauteur d'un seul des éléments de bouchage, perpendiculairement à son disque de base, et une longueur qui correspond directement au nombre d'éléments de bouchage à la suite les uns des autres, et non une hauteur qui correspondrait aux éléments de bouchage superposés, leurs disques respectifs se succédant perpendiculairement à leur plan.

Le dispositif fait donc avancer les éléments de bouchage le long d'un mouvement qui est globalement parallèle à leur disque. Ce mouvement est obtenu de façon aéraulique, c'est-à-dire qu'un fluide gazeux circule au sein du dispositif et, en arrivant sur les éléments de bouchage, les pousse et les met en mouvement, par exemple surtout en arrivant contre la jupe, ou le bord, de l'élément de bouchage.

Ce fluide gazeux peut être filtré, pour éviter d'ajouter des poussières dans les éléments de bouchage. Il peut s'agir simplement de l'air ambiant, mis en pression par une pompe adéquate. Au sein du dispositif, le fluide gazeux est envoyé dans un plénum dans lequel il circule. Ce plénum a globalement une forme de profil allongé dans la direction d'avance avec une section globalement rectangulaire. Ce plénum s'étend sur tout ou partie du parcours que doivent suivre les éléments de bouchage. Bien entendu, comme ce plénum doit permettre la circulation du fluide gazeux, il n'est pas fermé, mais présente des sorties en direction des éléments de bouchage, comme décrit ci-dessous, préférablement au niveau de la face avant.

Les éléments de bouchage, quant à eux, circulent dans un autre profilé, globalement contre le plénum décrit ci-dessus. La section de ce profilé, qui est perpendiculaire à la direction dans lequel il s'étend, à savoir la direction d'avance, tout comme le plénum, est de forme rectangulaire et de dimensions adaptées à l'élément de bouchage traité. Dans un plan perpendiculaire à la direction d'avance, le canal a une section rectangulaire, avec un grand côté et un petit côté. D'une part, la dimension du petit côté doit être bien plus petite que le diamètre de l'élément de bouchage, et, préférablement, à peine un peu plus grande que la dimension de l'élément de bouchage perpendiculairement au disque, c'est-à-dire sa hauteur, alors que, d'autre part, la dimension du grand côté est au moins égale à la plus grande dimension de l'élément de bouchage dans le plan du disque, de sorte que la section forme un gabarit de passage des éléments de bouchage, mais les maintient en position et évite qu'ils ne se retournent au coeur du canal. Une section avec de telles dimensions garantit que les éléments de bouchage circulent avec leurs disques les uns à la suite des autres dans la direction d'avance, sans possibilité de pivoter ou de changer d'orientation au sein du canal. En effet, avec un canal de dimensions appropriées, la mobilité réduite de l'élément de bouchage dans le canal garantit que l'élément de bouchage ne peut pas se trouver dans le canal avec son diamètre dans le sens de la hauteur du canal, ce qui garantit donc que l'élément de bouchage ne changera pas d'orientation lors de son cheminement dans le canal. En d'autres termes, la hauteur du canal correspond essentiellement à la hauteur de l'élément de bouchage, afin de permettre sa circulation tout en évitant que ledit élément de bouchage ne puisse pivoter sur lui-même. Cette caractéristique permet d'éviter les coincements ou les problèmes d'orientation des éléments de bouchage. Aussi, comme la grande dimension de la section correspond environ au diamètre de l'élément de bouchage, c'est-à-dire sa plus grande dimension dans le plan du disque, les éléments de bouchage sont globalement alignés dans la direction d'avance, c'est-à-dire que l'angle entre, d'une part, la direction d'avance, et, d'autre part, l'axe entre deux éléments de bouchage successifs est faible. On évite que le flux des éléments de bouchage soit significativement plus large que la largeur d'un élément de bouchage.

On comprend de ce qui précède que tant le plénum que le canal prennent une forme de profil qui s'étend dans la direction d'avance et qui a une section globalement rectangulaire. Le canal s'étend contre le plénum, c'est-à-dire que le canal se trouve au-delà d'un côté du plénum. La délimitation entre le canal et le plénum se fait au niveau d'un plan de fond, le plénum se trouvant d'un côté dudit plan de fond, alors que le canal se trouve de l'autre côté. La direction d'avance est parallèle au plan de fond, et la section du plénum ainsi que la section du canal sont perpendiculaires au plan de fond. Dans une configuration optimale, les éléments de bouchage circulent dans le dispositif en étant orientés avec leur disque parallèle au plan de fond. La hauteur des éléments de bouchage se retrouve donc perpendiculaire au plan de fond, qui se situe là où le canal est contre le plénum.

Le canal présente une face arrière, qui est celle du côté du plénum, donc au niveau du plan de fond. En vis-à-vis et parallèle à la face arrière, le canal présente une face avant. Les deux autres faces du canal, parallèles entre elles, sont deux tranches, qui correspondent, comme il a été expliqué, à la hauteur de l'élément de bouchage.

La face avant, la face arrière, et les deux tranches sont parallèles à la direction d'avance et s'obtiennent par l'extension, le long de cette direction, de la section rectangulaire du canal ; bien entendu, elles ne forment pas un canal scellé hermétiquement, puisqu'il est nécessaire de permettre la circulation du fluide gazeux qui va entraîner les éléments de bouchage.

Selon l'invention, le dispositif comprend un circuit aéraulique pour amener le fluide gazeux depuis le plénum jusque dans le canal pour y pousser les éléments de bouchage, le canal, au niveau de sa face arrière, se trouvant contre le plénum, et, au niveau de sa face avant, étant fermé au moins partiellement par une contre plaque que comprend le dispositif, préférablement une contre plaque amovible, et le circuit aéraulique débouchant dans le canal au niveau d'au moins une tranche.

Ainsi, le dispositif présente un circuit aéraulique, qui se trouve du même côté que le canal par rapport au plan de fond, et qui va conduire le fluide gazeux, autrement dit l'air, se trouvant dans le plénum, jusque dans le canal, où se trouvent les éléments de bouchage. Le canal n'étant pas obturé complètement au moins au niveau de ses extrémités le long de la direction d'avance, voire pas obturé au niveau de sa face avant, l'air peut s'écouler au-delà du canal et le flux peut donc s'installer. L'air est donc envoyé dans le plénum, puis dans le circuit aéraulique, puis dans le canal, puis hors du canal.

Une contre plaque vient fermer la face avant du canal au moins partiellement, ceci pour éviter que les éléments de bouchage, autrement dit les bouchons, sortent du canal. La contre plaque peut laisser une fente de sortie pour l'air qui est envoyé dans le canal, cette fente s'étendant éventuellement sur toute la longueur du canal.

Dans le dispositif, le circuit aéraulique débouche dans le canal au niveau de l'une ou des deux tranches. Ainsi, le circuit aéraulique dirige l'air depuis l'une des tranches vers celle opposée, et aussi dans la direction d'avance, mais évite de diriger l'air depuis la face arrière vers la face avant, ou depuis la face avant vers la face arrière. L'élément de bouchage reçoit donc l'air délivré dans le canal par le circuit aéraulique en direction de son côté, plutôt qu'en direction de son disque.

Dans des modes de réalisation possibles, la contre plaque est amovible et/ou réglable, de sorte à ajuster la distance entre la face avant et la face arrière, donc la hauteur de l'élément de bouchage acceptable, et/ou à ajuster la taille du jour laissé ouvert en face avant, pour la visibilité et/ou la sortie d'air.

Dans certains modes de réalisation du dispositif, il comprend au moins un répartiteur, disposé contre le plénum le circuit aéraulique étant aménagé dans ledit au moins un répartiteur. Comme il a déjà été évoqué, le dispositif se présente sous la forme d'un plénum contre lequel se trouve un canal, chacun d'un côté respectif d'un plan de fond, et l'air est envoyé, depuis le plénum, dans le canal, via un circuit aéraulique qui débouche dans l'une ou les tranches du canal. Il est alors avantageux de réaliser le circuit aéraulique dans un bloc qui vient dans l'angle entre la tranche du canal et le plénum. Ce circuit aéraulique est aménagé comme une cavité creusée depuis la face du répartiteur qui arrive contre le plénum. Le répartiteur organise une redirection du flux d'air depuis son passage entre le plénum et l'arrivée dans le répartiteur, globalement perpendiculaire au plan de fond, jusqu'à son passage entre le répartiteur et le canal, globalement parallèle au plan de fond.

La réalisation du circuit aéraulique sous forme de cavité creusée à la surface du répartiteur qui vient contre le plénum permet une réalisation particulièrement simple, ainsi qu'un nettoyage aisé et une bonne circulation d'air.

Ainsi, dans des modes de réalisation possibles, le circuit aéraulique aménagé dans le au moins un répartiteur comprend, d'une part, une cavité pour recevoir le fluide gazeux depuis le plénum, et, d'autre part, des injecteurs sous forme de rainures qui s'étendent depuis ladite cavité et débouchent dans le canal au niveau d'une tranche, pour envoyer le fluide gazeux dans ledit canal et ainsi pousser les éléments de bouchage. La cavité a une forme globalement allongée le long de la direction d'avance, ce qui facilite son positionnement et son montage contre le plénum, tout en garantissant que celle-ci aboutisse au droit d'orifices de passage d'air, prévus dans la paroi avant du plénum pour une circulation d'air. Cette cavité peut avoir une forme globalement oblongue, s'étirant dans la direction d'avance.

Le deuxième élément du circuit aéraulique au sein du répartiteur est un ensemble d'injecteurs qui débouchent dans le canal, donc au niveau de la tranche perpendiculaire au plan de fond. Ces injecteurs sont eux aussi éventuellement creusés depuis la face du répartiteur, et prennent à peu près la forme de rainure entre, d'une part, la cavité de réception de l'air dans le répartiteur, et, d'autre part, le canal au niveau d'une tranche. Ces injecteurs peuvent être parallèles entre eux.

Selon une caractéristique additionnelle possible, les injecteurs sont obliques par rapport à la tranche où ils aboutissent, de sorte que le flux qu'ils créent présente une composante dans la direction d'avance pour déplacer les éléments de bouchage. Ainsi, plutôt que d'être orienté exclusivement depuis une tranche vers la tranche opposée, donc perpendiculaire à la direction d'avance, l'injecteur est tel que son orientation a une composante le long de la direction d'avance. Le flux d'air créé lorsqu'il débouche dans le canal au niveau de la tranche n'a donc pas qu'une composante perpendiculaire à ladite tranche et vers la tranche opposée, mais aussi une composante le long de la direction d'avance. On favorise ainsi le déplacement des éléments de bouchage tous dans le même sens au sein du canal. Dans le cas contraire, si le flux d'air était envoyé par l'injecteur directement vers la tranche opposée, l'élément de bouchage risquerait d'avoir tendance à se déplacer dans le mauvais sens, et donc à réduire la vitesse de la succession de bouchons en file indienne.

Selon une caractéristique additionnelle possible, le au moins un répartiteur est fixé sur le plénum de façon démontable, par exemple par vissage. Cela permet d'opter, même de façon temporaire, pour des répartiteurs qui génèrent moins de flux d'air à un certain endroit, et plus de flux d'air à un autre endroit, en fonction par exemple de la forme du trajet à parcourir. On comprend que, dans l'invention, le dispositif peut avoir plusieurs répartiteurs les uns à la suite des autres le long du trajet, et ces répartiteurs peuvent être les mêmes ou différents.

Comme il sera encore décrit, le dispositif peut présenter la superposition d'un répartiteur fixé entre, d'une part, une plaque à la jonction entre le plénum et le canal, et, d'autre part, la contre plaque.

Selon une caractéristique additionnelle possible du dispositif, il comprend deux répartiteurs, chacun au niveau d'une tranche, le circuit aéraulique s'étendant dans chacun des deux répartiteurs pour que le fluide gazeux arrive au niveau des deux tranches du canal, préférablement de façon symétrique. Ainsi, le dispositif présente deux répartiteurs disposés chacun au niveau d'une tranche du canal. Préférablement, les répartiteurs se font face, à savoir que les injecteurs disposés sur l'un d'eux sont en regard de ceux disposés sur l'autre, par rapport à la direction d'avance.

On comprend que le circuit aéraulique que présente le dispositif est dans un tel cas aménagé tant sur l'un des répartiteurs que sur l'autre ; autrement dit, l'air circule depuis le plénum jusque dans le canal, en traversant, pour un chemin, l'un des répartiteurs, et, pour un autre chemin, l'autre répartiteur. Le circuit aéraulique, qui amène l'air du plénum jusqu'au canal, s'étend donc sur les deux répartiteurs. On comprend qu'un tel agencement est possible avec plus de deux répartiteurs, par exemple des répartiteurs qui se succèdent dans la direction d'avance, avec, en vis-à-vis, au moins un autre répartiteur. Une telle combinaison permet, par exemple, d'avoir un circuit aéraulique qui passe par un seul répartiteur, donc qui aboutit sur une seule tranche, pour une portion du trajet, puis, sur une portion nécessitant davantage de poussée, par exemple une montée, qui passe par deux répartiteurs, donc qui aboutit sur les deux tranches du canal.

Selon une autre caractéristique additionnelle possible du dispositif, il comprend une paroi avant délimitant le plénum du côté du canal et présentant au moins un orifice permettant la circulation du fluide gazeux depuis le plénum jusque dans le circuit aéraulique, ledit au moins un orifice se trouvant notamment en vis-à-vis de la cavité du circuit aéraulique, le cas échéant. Le au moins un répartiteur est, par exemple, monté sur la paroi avant, le cas échéant.

Selon une autre caractéristique additionnelle possible, la au moins une contre plaque est montée de façon amovible, notamment sur le répartiteur ou l'un d'eux. On peut ainsi avoir une seule contre-plaque amovible, fixée de façon amovible à l'un des répartiteurs, et qui couvre une partie du canal vers l'autre répartiteur, sans toutefois l'atteindre de sorte à laisser une fenêtre de passage pour l'air. La contre-plaque doit permettre d'éviter l'expulsion des éléments de bouchage, mais doit aussi permettre un contrôle visuel et/ou une évacuation de l'air, ce qui en facilite la circulation. On comprend que cela peut être atteint en ne fermant pas complètement l'espace entre les deux répartiteurs parallèlement au plan de fond, par exemple avec une plaque fixée à un répartiteur mais qui n'atteint pas l'autre, deux plaques, chacune fixée à l'un des deux répartiteurs qui se font face, mais celles-ci étant montées avec un écart entre elles, voire une ou plusieurs plaques qui ne sont pas complètement fermées, mais présentent des orifices, ouvertures, ouïes, passages, fenêtres, ou autres.

Ainsi, dans certains modes de réalisation du dispositif, il comprend deux plaques en face avant, dans le prolongement l'une de l'autre, leur éventuel écartement laissant une fente dans la face avant du canal, par exemple pour laisser s'échapper le fluide gazeux hors dudit canal. L'invention a aussi pour objet un procédé de mise en oeuvre d'un tel dispositif, à savoir un procédé pour déplacer de façon aéraulique des éléments de bouchage du type bouchon au sein d'un canal allongé, globalement rectilinéaire le long d'une direction d'avance et de section rectangulaire, et qui présente une face avant, une face arrière et deux tranches, l'élément de bouchage présentant un disque qui circule contre la face avant ou contre la face arrière, procédé dans lequel un fluide gazeux est envoyé dans le canal de sorte à y pousser les éléments de bouchage qui s'y trouvent et les déplacer le long d'une direction d'avance.

Préférablement, les bouchons circulent avec le disque contre la face arrière, ce qui résulte d'une orientation préalable dans un équipement d'orientation. Bien entendu, l'orientation inverse peut être choisie sans que cela ne perturbe le système ; les éléments de bouchage sont néanmoins orientés tous de la même manière dans le canal, où ils circulent les uns à la suite des autres.

Dans le procédé, les éléments de bouchage sont poussés les uns à la suite des autres, et chacun est poussé par le précédent ainsi que par le flux d'air dont la circulation est aménagée dans le canal. La circulation est linéaire au moins partiellement, en ce sens que dans au moins une partie du trajet, le déplacement se fait selon une droite, c'est-à-dire la direction d'avance. Selon l'invention, le fluide gazeux est envoyé dans le canal depuis au moins l'une des tranches. Autrement dit, lorsqu'il arrive dans le canal, l'air circule globalement parallèlement au disque de l'élément de bouchage. Il agit donc sur le bouchon en poussant sur la tranche, ou bord, de l'élément de bouchage, soit depuis l'extérieur, soit depuis l'intérieur. En sortant par une tranche, l'air envoyé débouche dans le canal à peu près parallèlement à la face avant et/ou la face arrière, et circule donc entre elles. On évite de préférence d'envoyer l'air vers l'une de ces deux faces, l'air étant envoyé depuis une tranche, ou les deux, entre chacune des deux faces. Bien entendu, une légère inclinaison peut être donnée au flux d'air en direction de l'une ou l'autre des faces, sans que cela soit aussi intense que si le flux est envoyé depuis l'une des deux faces, expulsé en direction de l'autre.

Selon une caractéristique additionnelle possible, le fluide gazeux est envoyé dans le canal avec une orientation ayant une composante le long de la direction d'avance. Ainsi, plutôt que d'envoyer le flux d'air depuis une tranche intégralement en direction de l'autre tranche, ce qui reviendrait à avoir un flux d'air globalement perpendiculaire à la tranche projetée le long de la direction d'avance, il est préférable que le flux lorsqu'il est envoyé dans le canal, ait un mouvement qui a une composante le long de la direction d'avance, autrement dit le long de l'axe dans lequel s'étend le canal. Ainsi, le bouchon n'est pas simplement poussé contre la tranche opposée, mais il est effectivement poussé dans le canal, le long de la direction d'avance.

Selon une autre caractéristique additionnelle possible, le fluide gazeux est envoyé dans le canal de façon symétrique, chaque fois depuis l'une des tranches vers l'autre et partiellement le long de la direction d'avance. Dans un tel cas, le fluide gazeux, air ou autre, est envoyé depuis chacune des tranches, donc en deux flux partiellement l'un vers l'autre. Comme chacun des flux a une composante le long de la direction d'avance, et dans le même sens, on double la force de poussée exercée contre l'élément de bouchage. En outre, l'avancement de chacun des deux flux en direction de la tranche opposée étant contré par celui venant de ladite tranche opposée, le flux sera dévié davantage le long de la direction d'avance, ce qui augmente encore significativement la force de poussée exercée sur les éléments de bouchage le long de la direction d'avance.

Brève description des figures : L'invention sera mieux comprise grâce à la description ci-dessous, qui se base sur des modes de réalisations possibles, expliqués de façon illustrative et nullement limitative, en référence avec les figures annexées, dans lesquelles :
- La figure 1 représente schématiquement un dispositif selon l'invention ; et
- La figure 2 montre en particulier les répartiteurs posés sur le plénum.

**Description détaillée** : Dans la suite de la description, des éléments présentant une structure identique ou des fonctions analogues seront désignés par une même référence.

Ainsi, cette invention peut plus particulièrement être réalisée sous la forme suivante.

Le dispositif 1 sert donc à déplacer des bouchons 2, qui peuvent être en plastique ou en métal. De façon générale, le bouchon 2 a un disque 17 circulaire, et un bord qui s'étend à partir de ce disque. Ce bord peut être globalement perpendiculaire au disque 17, comme dans le cas d'une capsule plastique simple, ou être légèrement évasé, comme c'est le cas parfois avec des couronnes métalliques avant qu'elles soient serrées sur le goulot d'une bouteille. L'élément de bouchage 2 a donc un diamètre qui correspond globalement au diamètre du disque 17, l'éventuel évasement n'ajoutant que peu. L'élément de bouchage, ou bouchon 2 a aussi une hauteur, qui est sa dimension dans la direction perpendiculaire au plan dans lequel se trouve le disque 17, cette direction étant celle de son axe de symétrie.

Dans un tel dispositif 1, les bouchons 2 sont déplacés les uns à la suite des autres, donc en une colonne d'un seul bouchon 2 de large. Leur position relative est telle que les disques 17 sont dans un même plan, et le déplacement se fait dans une direction parallèle à ce plan, donc parallèle aux rayons du cercle que forme le disque 17. Les éléments de bouchage 2 sont ainsi convoyés à plat, et en colonne, ce qui contribue à éviter par exemple que deux bouchons 2 s'emboîtent.

Les bouchons 2 sont déplacés grâce à un flux d'air, de la façon qui va être décrite.

Le dispositif 1 comprend un plénum 3, qui, pour l'ensemble, est une canalisation allongée dans une certaine direction, qui devient la direction d'avance 6. Le plénum 3 a donc une section qui s'étend dans cette direction, de sorte à créer un volume creux dans lequel de l'air sous pression peut être envoyé. La section du plénum 3 est globalement rectangulaire, et les bouchons 2 sont déplacés avec leur disque 17 parallèle à la trace d'un bord dudit rectangle, le long de la direction d'avance. Ce plénum 3 est ouvert de façon à créer une circulation d'air favorable à la poussée des éléments de bouchage 2, comme il va être décrit. L'air sous pression envoyé dans le plénum 3, en ressort grâce à des ouvertures créées pour amener l'air contre les éléments de bouchage 2 et les pousser dans leur propre canal 4 de circulation.

En effet, le dispositif 1 présente, en outre, un canal 4, lui aussi globalement sous forme d'une section rectangulaire qui s'étend dans la direction d'avance 6, et ce canal permet de contenir les bouchons 2 lors du déplacement crée par la circulation de l'air initialement envoyé dans le plénum 3.

En substance, le canal 4 est contre le plénum 3. Les profils globalement linéaires et de section rectangulaire qu'ils forment sont l'un contre l'autre. Comme il sera encore décrit plus loin, une même plaque forme une paroi du plénum 3 et une paroi du canal 4. Comme le canal 4 a une section plus petite que le plénum 3, le profil qu'il présente ne couvre pas entièrement le profil que présente le plénum 3.

La section du canal 4 est adaptée au type de bouchon 2 traité, et, plus précisément, à ses dimensions. En effet, et comme il a déjà été évoqué, l'élément de bouchage 2 est convoyé avec son disque 17 parallèle à la direction d'avance 6, qui est celle dans laquelle s'étendent tant le plénum 3 que le canal 4. La section du canal 4 est globalement de forme rectangulaire, avec deux bords aux dimensions correspondants au diamètre du disque 17, ou un peu plus grands dans le cas d'un bouchon 2 évasé ou au moins pour éviter des coincements, et avec deux autres bords dont les dimensions correspondent à la hauteur du bouchon 2.

Le dispositif 1 présente un plan de fond 18, auquel la direction d'avance 6 est parallèle. Le plénum 3 se trouve d'un côté de ce plan de fond 18 et le canal 4 se trouve de l'autre côté. Autrement dit, le canal 4 repose contre le plénum 3, et leur côté commun se trouve au niveau du plan de fond 18.

Préférablement, le canal 4 est tel que le disque 17 du bouchon 2 qui y circule est parallèle au plan de fond 18. Ainsi, la grande dimension de la section du canal 4, qui correspond environ au diamètre du disque 17 de l'élément de bouchage à convoyer, est parallèle au plan de fond 18, et la petite dimension de la section du canal 4 est perpendiculaire au plan de fond 18.

Au niveau du plan de fond 18, le dispositif 1 présente une plaque plane, ou plaque avant 12, éventuellement démontable, qui contribue, d'un côté, à définir le plénum 3, et, de l'autre côté, à définir le canal 4. Comme il va être décrit, cette plaque avant 12, qui forme donc aussi la face arrière 8 du canal 4, présente au moins un orifice 13 pour faire sortir l'air du plénum 3 et l'amener jusque contre les bouchons 2, plus précisément contre les bords des bouchons 2.

Une particularité de l'invention est que l'air soufflé, envoyé dans le plénum 3, arrive dans le canal 4 au niveau des bords de sa section qui ont la petite dimension, c'est-à-dire des bords prévus pour recevoir la hauteur du bouchon 2.

Plus précisément, le dispositif 1 comprend, pour amener le flux d'air jusque dans le canal 4 au niveau du petit côté, au moins un répartiteur 11.

Le répartiteur 11, préférablement sous la forme d'un bloc qui s'étend lui aussi dans la direction d'avance 6, est éventuellement posé contre la plaque avant 12. Le répartiteur 11 repose contre la plaque avant 12 avec un de ses côtés, alors qu'un autre de ses côtés forme un bord de la section du canal 4. Le répartiteur 11 est pourvu d'un circuit aéraulique 10 qui permet de diriger l'air reçu depuis le plénum 3 jusque dans le canal 4. En effet, le répartiteur 11 couvre l'orifice 13 dans la paroi avant 12 du plénum ; autrement dit, il est fixé au niveau du au moins un orifice 13 dans la plaque avant 10 du plénum 3.

L'orifice 13 dans la plaque avant 10 prend la forme d'un trou allongé dans la direction d'avance 6, voire de plusieurs tels trous de forme oblongue.

Le répartiteur 11 présente une cavité 14, dans sa face qui arrive contre le plénum 3. Le répartiteur 11 est positionné de sorte que cette cavité 14, qui forme une partie du circuit aéraulique 10, arrive au moins en partie au niveau de l'orifice 13 prévu dans la paroi avant 12 du plénum 3 ou de l'un d'eux, de sorte à permettre que le flux d'air créé dans le plénum 3 sorte du plénum 3 au niveau de l'orifice 13, et arrive dans le circuit aéraulique 10, plus précisément au niveau de la cavité 14 dont est pourvu le répartiteur 11.

Le répartiteur 11 présente une façade et un fond, parallèles au plan de fond 18, le fond reposant contre la paroi avant 12 du plénum 3. La cavité 14 est donc prévue au niveau du fond du répartiteur 11. Le circuit aéraulique 10 présente, en outre, en aval de la cavité 14, des injecteurs 15 pour amener le flux d'air depuis la cavité 14 jusque dans le canal 4, et ce, comme il a été dit, pour souffler sur les éléments de bouchage contre leur côté. De la même manière que la cavité 14, ces injecteurs 15 sont préférablement aménagés dans le fond du répartiteur 11. Dans une réalisation simple, le circuit aéraulique 10 est donc simplement creusé dans le fond du répartiteur 11, c'est-à-dire que la cavité 14 et les injecteurs 15 qui lui suivent débouchent sur le fond du répartiteur 11, ce qui permet par exemple d'y avoir accès après démontage du répartiteur 11, pour nettoyer le circuit aéraulique, entièrement accessible depuis le fond du répartiteur 11.

Il est avantageux d'avoir le répartiteur 11 sous forme de pièce démontable, et donc le dispositif comme au moins partiellement démontable. En effet, comme l'épaisseur du répartiteur 11 définit au moins partiellement la hauteur maximale acceptable des éléments de bouchage, donc leur dimension perpendiculaire à leur disque, puisque le répartiteur 11 porte la tranche 9 projetée dans la direction d'avance 6 et contribue ainsi à définir un bord du canal 4, son caractère éventuellement démontable permet d'utiliser un répartiteur 11 correspondant à l'élément de bouchage à faire circuler dans le canal 4. Si le bouchon est haut, il faudra donc choisir un répartiteur 11 épais, et inversement. Il est en effet plus pertinent d'utiliser un répartiteur 11 dont l'épaisseur est proche de la hauteur de l'élément de bouchage à traiter, et donc d'aménager un tel canal 4, ceci pour éviter des mouvements de l'élément de bouchage excessifs inutiles et énergivores au sein du canal 4, entre face arrière 8 et face avant 7, éventuellement des incessantes rotations partielles ou vibrations.

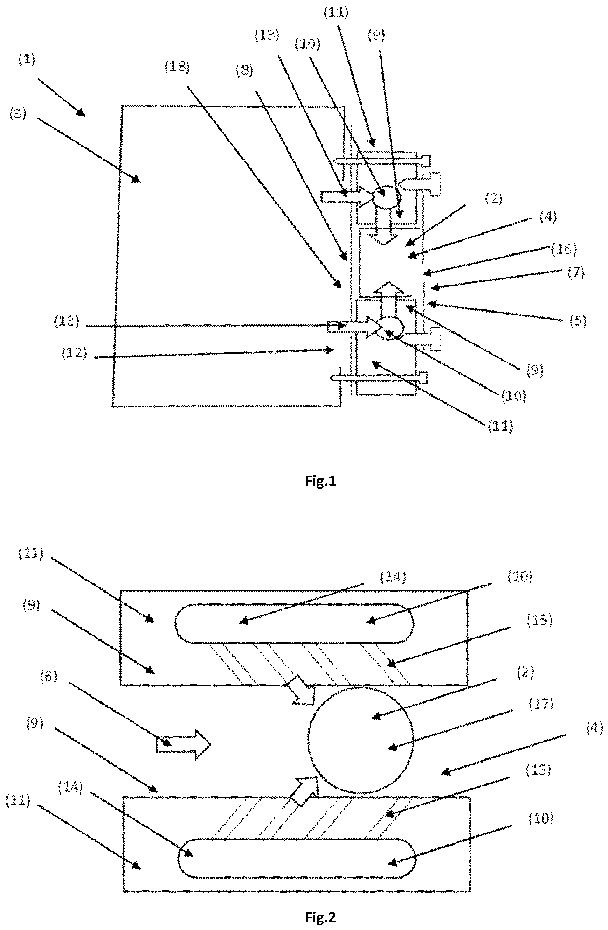

Comme le montre la figure 2, les injecteurs 15 prennent la forme de rainures linéaires dans le fond du répartiteur 11. Ces rainures débouchent, à une extrémité, dans la cavité 14, et, à l'autre extrémité, dans la face du répartiteur 11 qui contribue à définir le canal 4, au niveau de la petite longueur de sa section.

L'air soufflé dans le plénum 3 en sort donc par le au moins un orifice 13 dans la paroi avant 12, arrive dans le circuit aéraulique 10 au niveau de la cavité 14, puis continue dans les injecteurs 15, jusqu'à arriver dans le canal 4. L'air est envoyé dans le canal 4 sensiblement parallèlement au plan de fond 18. Autrement dit, l'air arrive dans le canal 4 depuis le répartiteur 11 qui en définit au moins l'un des côtés perpendiculaires au plan de fond 18, donc arrive dans le canal 4 depuis l'un de ces côtés. Grâce à cet arrangement, l'air arrive dans le canal 4 non pas depuis l'une de ses faces parallèles au disque 17 du bouchon 2 et donc au plan de fond 18, mais depuis au moins l'une de ses deux autres faces, qui y sont perpendiculaires.

En outre, il est avantageux que les injecteurs 15 envoient l'air dans le canal 4 non pas perpendiculairement à la surface où ils débouchent. En effet, un flux d'air perpendiculaire au bord du canal 4 aurait pour effet de plaquer bouchon 2 contre le côté opposé, avec peu de garantie de le faire avancer dans la direction d'avance 6 et dans le sens voulu. Préférablement, les injecteurs 15 sont donc orientés avec une composante dans la direction d'avance 6, pour que le flux d'air qu'ils amènent crée une force sur le bouchon 2 le long de la direction d'avance 6. Autrement dit, les rainures qui forment les injecteurs 15 sont donc de biais, et s'étendent avec une composante dans la direction d'avance 6, depuis la cavité 14 jusqu'à la face du répartiteur 11 qui contribue à définir le canal 4, et ce dans le sens souhaité pour le mouvement des bouchons 2.

Dans certains modes de réalisation avantageux, le dispositif 1 présente deux répartiteurs 11 qui se font face, chacun d'eux définissant un des côtés du canal 4 qui sont perpendiculaires à la paroi avant 12 et donc au plan de fond 18. Il est alors envisageable que les injecteurs 15 des deux répartiteurs 11 soient obliques, à savoir symétriques par rapport au canal 4. L'angle peut être entre 20 et 70 degrés, préférablement entre 35 et 55 degrés.

Pour faciliter la circulation d'air dans le canal 4 et, par conséquent, le mouvement des bouchons 2, le canal 4 n'est pas entièrement fermé au niveau de sa face avant 7. Pour ce faire, le dispositif 1 présente au moins une contre-plaque 5, disposée parallèle au plan de fond 18. Cette contre-plaque 5 couvre seulement une partie de l'espace entre les deux bords du canal 4, ces bords étant préférablement portés par les répartiteurs 11, comme il a été décrit plus haut. Préférablement, cette contre-plaque 5 est fixée mais réglable en position, de sorte à ajuster l'espace laissé ouvert dans la face avant 7 du canal 4. Dans des réalisations avantageuses, le dispositif 1 présente deux telles contre-plaques 5, et au moins l'une d'elles est réglable en position vers l'autre, pour régler facilement la fente 16 entre elles.

On comprend de ce qui précède que le dispositif présente le montage, l'un sur l'autre, d'une contre-plaque 5, montée sur un répartiteur 11, lui-même monté sur la paroi avant 12 du plénum 3, elle-même par exemple montée sur un profil en U ou en C pour le fermer en créant ledit plénum 3.

Dans certains modes de réalisation mentionnés, le circuit aéraulique 10 débouche à la surface du répartiteur 11, plus précisément à la surface qui vient au niveau du plan de fond 18. Dans d'autres modes de réalisation, le circuit aéraulique 10, dans le répartiteur, s'étend à distance des deux surfaces du répartiteur 11, l'une venant contre le plénum 3 et l'autre lui étant parallèle à distance. Autrement dit, le circuit aéraulique 10 circule au moins en partie au coeur du répartiteur et non à sa surface. Cela est notamment le cas pour les injecteurs 15, la cavité 14 qui les alimente pouvant être creusée depuis la surface du répartiteur 11 et donc accessible depuis elle. Les injecteurs 15 débouchent alors au niveau de la tranche 9 non pas au niveau de la face avant 7 ou face arrière 8 du canal, mais débouchent dans le canal 4 au niveau de la tranche 9, entre ces deux faces. Le flux d'air ainsi obtenu est envoyé contre les éléments de bouchage non pas depuis l'angle entre une tranche 9 et la face arrière 8, mais depuis une zone de la tranche 9 qui se situe à distance tant de la face avant 7, dans le prolongement d'une des surfaces frontales du répartiteur 11, que de la face arrière 8, dans le prolongement de l'autre surface frontale dudit répartiteur 11. Cela évite notamment que le flux d'air, lorsqu'il émerge depuis une embouchure des injecteurs 15 à l'angle de la tranche et de la face avant, pousse l'élément de bouchage en direction de la face arrière, ou inversement depuis la face arrière vers la face avant, renforçant alors les frottements. Lorsque l'air est envoyé depuis une zone à distance des faces avant et arrière du canal, on évite une partie des frottements. Cela a notamment comme avantage de réduire l'énergie nécessaire pour déplacer les bouchons, notamment en limitant les frottements, les coincements ou les mauvaises orientations des bouchons.

Bien que l'invention ait été décrite en relation avec des réalisations spécifiques, leurs caractéristiques constitutives, en tout ou partie, peuvent être librement combinées sous forme d'autres réalisations.

## Revendications

1. Dispositif (1) de convoyage d'élément de bouchage (2) du type bouchon, où les éléments de bouchage (2) sont poussés de façon aéraulique, ledit dispositif (1) comprenant, d'une part, un plénum (3) allongé dans lequel circule un fluide gazeux, et, d'autre part, un canal (4) dans lequel circulent les éléments de bouchage (2) selon une direction d'avance (6) et qui présente une face avant (7), une face arrière (8), et deux tranches (9)
**caractérisé en ce que**
le dispositif (1) comprend un circuit aéraulique (10) pour amener le fluide gazeux depuis le plénum (3) jusque dans le canal (4) pour y pousser les éléments de bouchage, ledit canal (4), au niveau de sa face arrière (8), se trouvant contre le plénum (3), et, au niveau de sa face avant (7), étant fermé au moins partiellement par une contre-plaque (5) que comprend le dispositif, le circuit aéraulique (10) débouchant dans le canal (4) au niveau d'au moins une tranche (9).

2. Dispositif (1) selon la revendication 1, **caractérisé en ce qu'**il comprend au moins un répartiteur (11), disposé contre le plénum (3), le circuit aéraulique (10) étant aménagé dans ledit au moins un répartiteur (11).

3. Dispositif (1) selon la revendication 2, **caractérisé en ce que** le circuit aéraulique (10) aménagé dans le au moins un répartiteur (11) comprend, d'une part, une cavité (14) pour recevoir le fluide gazeux depuis le plénum (3), et, d'autre part, des injecteurs (15) sous forme de rainures qui s'étendent depuis ladite cavité (14) et débouchent dans le canal (4) au niveau d'au moins une tranche (9), pour envoyer le fluide gazeux dans ledit canal (4) et ainsi pousser les éléments de bouchage (2).

4. Dispositif (1) selon la revendication 3, **caractérisé en ce que** les injecteurs (15) sont obliques par rapport à la tranche (9) où ils aboutissent, de sorte que le flux qu'ils créent présente une composante dans la direction d'avance (6) pour déplacer les éléments de bouchage (2).

5. Dispositif (1) selon l'une quelconque des revendications 2 à 4, **caractérisé en ce que** le au moins un répartiteur (11) est fixé sur le plénum (3) de façon démontable.

6. Dispositif (1) selon l'une quelconque des revendications 2 à 5, **caractérisé en ce qu'**il comprend deux répartiteurs (11), chacun au niveau d'une tranche (9), le circuit aéraulique (10) s'étendant dans chacun des deux répartiteurs (11) pour que le fluide gazeux arrive au niveau des deux tranches (9) du canal, préférablement de façon symétrique.

7. Dispositif (1) selon l'une quelconque des revendications précédentes, **caractérisé en ce qu'**il comprend une paroi avant (12) délimitant le plénum (3) du côté du canal (4) et présentant au moins un orifice (13) permettant la circulation du fluide gazeux depuis le plénum (3) jusque dans le circuit aéraulique (10).

8. Dispositif (1) selon l'une quelconque des revendications précédentes, **caractérisé en ce que** la au moins une contre-plaque (5) est montée de façon amovible, notamment sur le répartiteur (11) ou l'un d'eux.

9. Dispositif (1) selon l'une quelconque des revendications précédentes, **caractérisé en ce que** la au moins une plaque (5) est montée de façon réglable, notamment de sorte à régler la largeur d'une fente (16) au niveau de la face avant (7).

10. Dispositif (1) selon l'une quelconque des revendications précédentes, **caractérisé en ce qu'**il comprend deux plaques (5) en face avant (7), dans le prolongement l'une de l'autre.

11. Répartiteur (11) pour un dispositif selon l'une quelconque des revendications 2 à 6.

12. Procédé pour déplacer de façon aéraulique des éléments de bouchage (2) du type bouchon au sein d'un canal (4) allongé, globalement rectilinéaire le long d'une direction d'avance (6) et de section rectangulaire, et qui présente une face avant (7), une face arrière (8) et deux tranches (9), l'élément de bouchage (2) présentant un disque (17) qui circule contre la face avant (7) ou contre la face arrière (8), procédé dans lequel un fluide gazeux est envoyé dans le canal (4) de sorte à y pousser les éléments de bouchage (2) qui s'y trouvent et les déplacer le long d'une direction d'avance (6) procédé **caractérisé en ce que**
le fluide gazeux est envoyé dans le canal (4) depuis au moins l'une des tranches (9).

13. Procédé selon la revendication 12, dans lequel le fluide gazeux est envoyé dans le canal (4) depuis chacune des deux tranches (9) en vis-à-vis l'une de l'autre.

14. Procédé selon l'une quelconque des revendications 12 ou 13, dans lequel le fluide gazeux est envoyé dans le canal (4) avec une orientation ayant une composante le long de la direction d'avance (6).

15. Procédé selon la revendication 13 et selon la revendication 14, dans lequel le fluide gazeux est envoyé dans le canal (4) de façon symétrique, chaque fois depuis l'une des tranches (9) vers l'autre et partiellement le long de la direction d'avance (6).
